# EUROPEAN PATENT APPLICATION

(11) **EP 2 447 860 A2**
(43) Date of publication of application: **02.05.2012**
(21) Application number: 11178833.7
(22) Date of filing: 25.08.2011
(51) Int. Cl.: G06F 17/30

(54) **Methods, systems and computer program products for managing memory usage on a computing device**

(30) Priority: 27.10.2010 US 913202
(71) Applicant: Sony Ericsson Mobile Communications AB, 221 88 Lund (SE)
(72) Inventor: Wendelrup, Heino, SE-217 57 Malmö (SE)
(74) Representative: VALEA AB

(57) **Abstract**

Systems and methods of managing memory usage on a computing device include obtaining a data file having a first quality and a first file size. A modified quality data file is automatically generated from the obtained data file responsive to obtaining the data file. The modified quality data file has a second quality and a second file size, the second file size being less than the first file size. The modified quality data file is automatically stored on a memory of the computing device and the obtained data file is automatically transferred to a storage device remote from the computing device.

## Description

### FIELD OF THE INVENTION

This invention relates to memory management for computing devices, and more particularly to memory management for devices with limited storage, such as wireless communication (mobile) terminals.

### BACKGROUND OF THE INVENTION

Personal electronic/computing devices often provide a wide range of functionalities to a user. For example, mobile terminals, originally used primarily as a convenient form of voice communications, now include an extensive range of additional functionality. Examples of additional functionality include internet access and multimedia features, such as cameras to acquire pictures and videos and display screens with higher quality to view video files. In addition, the quality of video files available continues to improve. For example, smart phones may include a 12 megapixel (Mp) and a touchscreen extending over an entire face of the smart phone,

In addition, greater connectivity of electronic/computing devices is provided by the "cloud" of the internet, making ever greater quantities of video files available to users as well as providing users the opportunity to readily share with others video files created with their own devices.

With the increasing number and quality of video files used with personal electronic devices, the memory requirements to store these files are generally increasing at a rate exceeding the rate of increase in storage available on these devices. As a result, a user must either delete some of these files or transfer the files to a remote storage location. For example, a user of a mobile terminal using the mobile terminal to take pictures and videos generally must either move some of the obtained video files to an alternate location, such as their personal computer, or a remote storage location provided by a server or the like. While this does address the problem of freeing more memory on the personal electronic/computing device, the moved video files are then not available on the personal electronic/computing device. To view/play, transmit or otherwise access these video files, they must first be downloaded by the user. Generally, this requires coupling the personal electronic device to the home computer (directly or using a removable memory card or the like) or accessing the remote storage device, for example, over the internet "cloud" using a communication facility of the personal electronic device. This requires the user to not only find the remotely stored video file but, typically, to open a different interface/application on the personal electronic device to access the internet, such as a browser application.

### SUMMARY OF INVENTION

In some embodiments of the present invention, computer-implemented methods of managing memory usage on a computing device include obtaining a data file having a first quality and a first file size. A modified quality data file is automatically generated from the obtained data file responsive to obtaining the data file. The modified quality data file has a second quality and a second file size. The second file size is less than the first file size. The modified quality data file is automatically stored on a memory of the computing device and the obtained data file is automatically transferred to a storage device remote from the computing device. The obtained data file may be a video file and the modified quality data file may be a reduced quality video file.

In other embodiments, automatically generating the reduced quality video file and automatically transferring the obtained video file are preceded by determining if an available memory size of the computing device meets a transfer criterion. The reduced quality video is only generated and the obtained video file is only transferred when the available memory size meets the transfer criterion.

In further embodiments, the computing device has a display having a resolution and the second quality corresponds to the resolution of the display. The computing device may be a mobile terminal having a camera and obtaining the video file may include capturing the video file using the camera.

In other embodiments, automatically transferring the obtained video file is followed by receiving a request to retrieve the obtained video file and automatically retrieving the transferred obtained video file from the remote storage device responsive to the received request. It may also be determined if an additional video file that has been transferred from the computing device is sequentially associated with the transferred obtained video file and the additional video file may be automatically retrieved when the additional video file is sequentially associated with the transferred obtained video file.

In yet further embodiments, automatically transferring the obtained video file is followed by receiving a request to retrieve the obtained video file and determining a quality called for by the received request. The stored reduced quality video file is provided responsive to the received request when the received request does not call for the first quality and the transferred obtained video file is automatically retrieved from the remote storage device and the retrieved video file is provided responsive to the received request when the received request calls for the first quality. Determining if the received request calls for the first quality may include determining the received request calls for the first quality when the computing device is connected to an external device having a quality that is not supported by the reduced quality video file. Determining if the received request calls for the first quality may include identifying an application that generated the received request and determining if the received request calls for the first quality based on a characteristic of the application. The characteristic may be a zoom functionality or an edit functionality.

In other embodiments, the computing device is a mobile terminal and the storage device remote from the computing device has an associated internet address. Automatically transferring the obtained video file includes determining a designated access method of the mobile terminal for the associated internet address and transferring the obtained video file to the storage device using the designated access method.

In further embodiments, a computing device includes a memory, a user interface, an internet communication interface and a cache module. The cache module is configured to obtain a video file having a first quality and a first file size responsive to an input from the user interface, to automatically generate a reduced quality video file from the obtained video file responsive to obtaining the video file, wherein the reduced quality video file has a second quality and a second file size, the second file size being less than the first file size, to automatically store the reduced resolution video file on the memory and to automatically transfer the obtained video file to a storage device remote from the computing device using the internet communication interface.

In other embodiments, the computing device includes a display having a resolution and the second quality corresponds to the resolution of the display. The computing device may be a mobile terminal and the user interface may include a camera. The cache module may be configured to obtain the video file from the camera responsive to a request from the user interface. The cache module may further be configured to receive a request to retrieve the obtained video file from the user interface and to automatically retrieve the transferred obtained video file from the remote storage device using the internet communication interface responsive to the received request. The cache module may also be configured to determine a quality called for by a received request to retrieve the obtained video file and to retrieve the reduced quality video file from the memory when the received request does not call for the first quality and to automatically retrieve the obtained video file having the first quality from the remote storage device when the received request calls for the first quality.

In other embodiments, the computing device also includes an external device interface. The cache module may be configured to determine the received request calls for the first quality when the external device interface is connected to an external device having a quality that is not supported by the reduced quality video file.

In yet other embodiments, a computer program product for managing memory usage on a computing device is provided as a non-transitory computer-readable storage medium having computer-readable program code embodied therein. The computer-readable program code includes computer-readable program code that obtains a video file having a first quality and a first file size. The computer-readable program code also includes computer-readable program code that automatically generates a reduced quality video file from the obtained video file responsive to obtaining the video file. The reduced quality video file has a second quality and a second file size. The second file size is less than the first file size. The computer-readable program code also includes computer-readable program code that automatically stores the reduced resolution video file on a memory of the computing device and computer-readable program code that automatically transfers the obtained video file to a storage device remote from the computing device.

Computer program products and computing devices including other aspects of the methods described above are also provided.

### BRIEF DESCRIPTION OF THE DRAWINGS

FIG. is a block diagram of a network for managing memory usage in accordance with some embodiments of the present invention;

FIG. 2 is a block diagram that illustrates an electronic computing device/mobile terminal in accordance with some embodiments of the present invention;

FIG. 3 is a flowchart of operations for managing memory usage in a computing device in accordance with some embodiments of the present invention.

FIG. 4 is a flowchart of operations for managing memory usage in a computing device in accordance with further embodiments of the present invention.

### DETAILED DESCRIPTION OF PREFERRED EMBODIMENTS

Various embodiments of the present invention will now be described more fully hereinafter with reference to the accompanying drawings. However, this invention should not be construed as limited to the embodiments set forth herein. Rather, these embodiments are provided so that this disclosure will be thorough and complete, and will convey the scope of the invention to those skilled in the art.

It will be understood that, as used herein, the term "comprising" or "comprises" is open-ended, and includes one or more stated elements, steps and/or functions without precluding one or more unstated elements, steps and/or functions. As used herein, the singular forms "a", "an" and "the" are intended to include the plural forms as well, unless the context clearly indicates otherwise. The term "and/or" and "/" includes any and all combinations of one or more of the associated listed items. In the drawings, the size and relative sizes of regions may be exaggerated for clarity. Like numbers refer to like elements throughout.

Some embodiments may be embodied in hardware and/or in software (including firmware, resident software, micro-code, etc.). Consequently, as used herein, the term "signal" may take the form of a continuous waveform and/or discrete value(s), such as digital value(s) in a memory or register. Furthermore, various embodiments may take the form of a computer program product on a computer-usable or computer-readable storage medium having computer-usable or computer-readable program code embodied in the medium for use by or in connection with an instruction execution system. Accordingly, as used herein, the terms "circuit," "module" and "controller" may take the form of digital circuitry, such as computer-readable program code executed by an instruction processing device(s) (e.g., general purpose microprocessor and/or digital signal processor), and/or analog circuitry. A device inducing such hardware may be interchangeable referred to herein as an "electronic device" or a "computing device."

Embodiments are described below with reference to block diagrams and operational flow charts. It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Although various embodiments of the present invention are described in the context of wireless communication (mobile) terminals for purposes of illustration and explanation only, the present invention is not limited thereto. It is to be understood that the present invention can be more broadly used in any sort of electronic device to manage memory on the device, providing the appearance to the user that the electronic device has a substantially unlimited amount of storage.

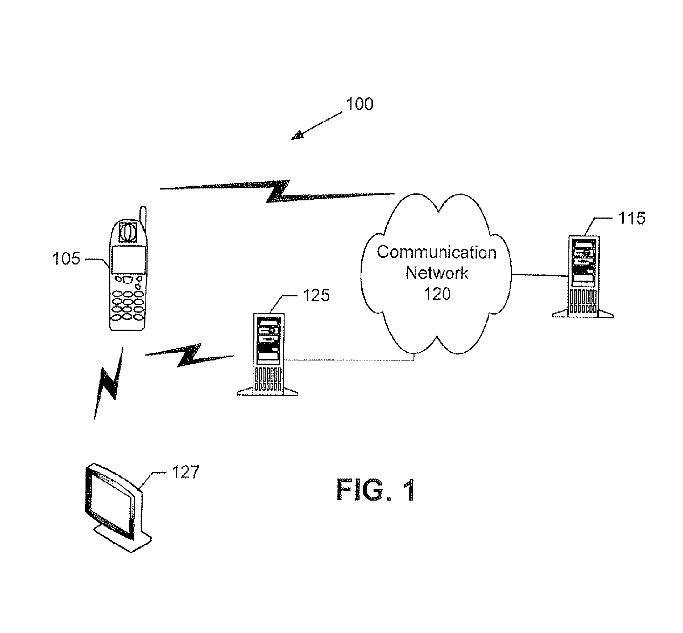

Referring now to FIG. 1, a network 100 in which embodiments of the present invention may provide for memory management will be described. As seen in FIG. 1, the network 100 includes an electronic (computing) device 105, such as a mobile terminal, a server including a remote storage device 115 and a personal computer that includes a storage device 125. These devices are all illustrated as being communicatively connected through a communication network 120, such as the Internet "cloud." Also shown is an external device, shown as a display 127 in FIG. 1. The display 127 has a quality greater than a quality of a display included in the mobile terminal 105. The quality difference may include a higher resolution, greater clarity, greater contrast or the like as will be understood by those of skill in the art. However, for purposes of description herein, quality differences will be referred to with reference to resolution differences for the external device.

As seen in the embodiments of FIG. 1, the electronic device 105 may communicate with the personal computer including a storage device 125 and the display 127 over a local area wireless connection, such as Wi-Fi or Bluetooth. The electronic device in the embodiments of FIG. 1 is also illustrated as being wirelessly connected to the communication network 120, for example, through the base station of a wide area cellular communications network. As such, the electronic device 105 may also be communicatively coupled to the personal computer including the storage device 125 and the server including the remote storage device 115 over the communication network 120. The electronic device 105 may, in some embodiments, have a wired connection to the storage device 125 and/or the display 127.

The communication network 120 may represent a global network, such as the Internet, or other publicly accessible network including one or more wireless and/or wireline communication nodes. The network 120 may also, however, represent a wide area network, a local area network, an Intranet, or other private network, which may not accessible by the general public. Furthermore, the communication network 120 may represent a combination of public and private networks or a virtual private network (VPN).

The electronic computing device 105 is described as a mobile terminal for purposes of illustrating some embodiments of the present invention. It will be understood, however, that the present invention is not limited to such embodiments and that the electronic device may be embodied as any electronic device that stores volumes of files exceeding an available memory of the device. Thus, according to various embodiments of the present invention, the electronic device 105 may be a mobile terminal, such as a wireless phone, or may be relatively stationary device.

Although FIG. 1 illustrates an exemplary communication network 100, it will be understood that the present invention is not limited to such configurations, but is intended to encompass any configuration capable of carrying out the operations described herein.

As will be further described herein, embodiments of the present invention may allow a user of a computing device to seamlessly move video files to a remote storage location, such as a server supported memory service or a home personal computer (PC), while maintaining a compressed/reduced size version of the video file in the video file on the computing device. The compressed version may, for example, have a high enough quality to meet the needs of the computing device's local display or the needs for attachments to email and multimedia message service (MMS) transmissions. As such, various applications on the computing device may locally access all the video files the user generates or otherwise obtains with the quality needed by the application with a reduced usage of memory on the computing device. For example, the computing device may be a mobile terminal including a camera that captures a high quality 12 megapixel (Mpix) image video files that has a 2 megabits (Mb) file size for storage, but an acceptable quality for many applications on the mobile terminal may be provided by a reduced quality video file that has a 0.05Mb file size for storage.

Embodiments of the present invention provide such a reduction in memory required for storage while still allowing seamless to the user access to the high quality video file using a cache methodology that stores some or all of the high quality content on a remote storage device, such as a server memory or the user's home PC, in the background (i.e., not seen by the user). The methodology may create reduced size files of some or all content that may be used by the applications on the computing device. In some embodiments, traditional caching methods may be adapted for use in determining what video files should also be stored locally in the computing device memory in parallel with the reduced file size file. For example, files likely to be needed in the high quality format with some frequency may be maintained locally to avoid user detectable delays due to the retrieval process that occur so frequently that the benefit in memory savings is not advantageous. In other cases, the higher quality video file may be downloaded in the background responsive to an application requesting the video file that requires the higher quality version, for example, in picture editing and television (TV) viewing or when otherwise connected to a higher quality external device.

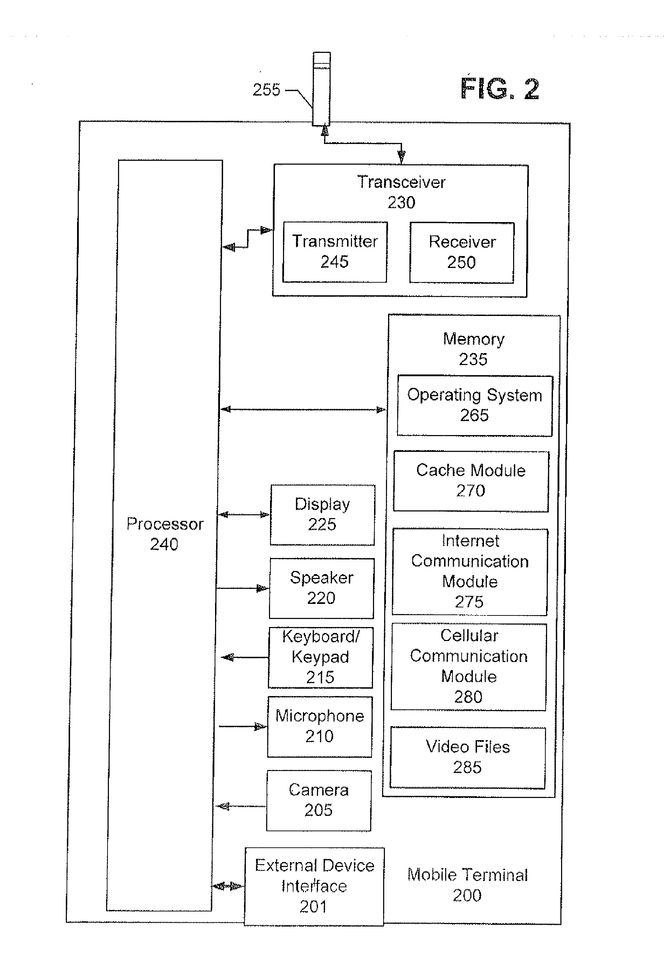

Referring now to FIG. 2, an exemplary mobile terminal 200 that may be used to implement a device, such as the electronic computing device 105 of FIG. 1, in accordance with some embodiments of the present invention. The mobile terminal 200 includes an external device interface 201, a camera/video recorder 205, a microphone 210, a keyboard/keypad 215, a speaker 220, a display 225, a transceiver 230, and a memory 235 that communicate with a processor 240. The display 225 may be a touchscreen display and the display 225, keyboard/keypad 215 and/or microphone 210 may provide a user interface for the mobile terminal 200. The transceiver 230 comprises a transmitter circuit 245 and a receiver circuit 250, which respectively transmit outgoing radio frequency signals to base station transceivers and receive incoming radio frequency signals from the base station transceivers via an antenna 255. The radio frequency signals transmitted between the mobile terminal 200 and the base station transceivers may comprise both traffic and control signals *(e.g.,* paging signals/messages for incoming calls), which are used to establish and maintain communication with another party or destination. The radio frequency signals may also comprise packet data information, such as, for example, cellular digital packet data (CDPD) information. The external device interface 201 may be used to communicate with external devices. The external device interface 201 may be a wired interface or a wireless interface such as WiFi or Bluetooth, in which case it may use the antenna 255 or a separate antenna. In some embodiments where the external device interface 201 is a wireless interface, rather than being a separate module, the external device interface is provided by the transceiver 230.

The foregoing components of the mobile terminal 200 may be included in many conventional mobile terminals and their functionality is generally known to those skilled in the art.

The processor 240 communicates with the memory 235 via an address/data bus. The processor 240 may be, for example, a commercially available or custom microprocessor. The memory 235 is representative of the one or more memory devices containing the software and data used to operate the mobile terminal as well as to perform a transaction in which the user of the mobile terminal is authenticated as the purchaser. The memory 235 may include, but is not limited to, the following types of devices: cache, ROM, PROM, EPROM, EEPROM, flash, SRAM, and DRAM.

As shown in FIG. 2, the memory 235 may contain five or more categories of software and/or data: the operating system 265, a cache module 270, an internet communication module 275, a cellular communication module 280 and/or video files 285. The operating system 265 generally controls the operation of the mobile terminal 200. In particular, the operating system 265 may manage the mobile terminal's software and/or hardware resources and may coordinate execution of programs/applications by the processor 240. The cellular communication module 280 may be configured to manage the cellular communication protocols that are used to allow the mobile terminal 200 to communicate with other devices and systems. It will be understood that, while for purposes of explaining the present invention, the discussion herein will refer to video files, the present invention is not limited to managing memory usage of video files but may be suitable with other types of obtained data files stored in local memory of a device having access to a remote storage device where the obtained data files may be provided to applications with different quality levels and associated file sizes.

The internet communication module 275 may be configured to manage the internet communications from the mobile terminal 200. It will be understood that the internet communication module may work cooperatively with the cellular communication module 280 or the external device interface 201 to provide an internet communications interface to the mobile terminal 200. For example, the internet communication module 275 may include a browser application and user preferences data, including a designated internet access method for the mobile terminal for a destination internet protocol (IP) address. For example, when a WiFi access point is available to the mobile terminal, through the external device interface 20] or the transceiver 230, the specified access method may be WiFi. The access method may also be through a wide area cellular network.

The cache module 285 may be configured to obtain a video file having a first quality and a first file size responsive to an input from the user interface and to automatically generate a reduced quality video file from the obtained video file responsive to obtaining the video file. The reduced quality video file has a second quality and a second file size. The second file size is less than the first file size so that a smaller amount of memory on the mobile terminal 200 is required to store the reduced quality video file. The cache module 285 may also be configured to automatically store the reduced resolution video file on the memory 235 in a video file 285 memory section. The cache module 285 is further configured to automatically transfer the obtained video file to a storage device remote from the mobile terminal 200, for example, using the internet communication interface provided by the internet communication module 275. In other words, as the various cache operations occur automatically, they operate in the background to a user so that the user need not even be aware that the higher quality obtained video file has not been stored locally. In other words, as used herein, "automatically" refers to operations occurring without further user input (*e.g*., after obtaining the video file from the user at the cache module 270).

It will be understood that, in some embodiments, the cache module 285 is configured to store the first quality obtained video file in the video file 285 memory section instead of or in addition to transferring the obtained video file to a remote storage device. In such embodiments, the reduced quality video file may not be generated or stored at the mobile terminal 200 when the first quality obtained video file is stored locally. However, the reduced quality video file may be generated and stored even when the first quality obtained video file is stored locally.

In some embodiments, the video file 285 memory section is fully managed by the cache module 270. In such embodiments, any application executing on the mobile terminal 200 must use the cache module 270 to access or store files in the video file 285 memory section.

The cache module 285 is further configured to retrieve the remotely stored obtained video file. In some embodiments, the cache module 270 is configured to determine a quality called for by a received request to retrieve the obtained video file and to retrieve the reduced quality video file from the memory when the received request does not call for the first quality of the remotely stored obtained video file. The cache module 285 is configured to automatically retrieve the obtained video file having the first quality from the remote storage device when the received request calls for the first quality.

As further seen in the embodiments of FIG. 2, the mobile terminal 200 may include an external device interface 201 that may be connected to an external device, such as a display or printer, which has a quality/resolution not fully supported by the reduced quality video file, which may fully support the mobile terminal display 225. The cache module 270 is configured to determine that the received request calls for the first quality of the remotely stored video file when the external device interface 201 is connected to an external device having a quality that is not supported by the reduced quality video file.

Although FIGs. 1 and 2 illustrates an exemplary software and hardware architecture that may be used to perform memory management, in accordance with some embodiments of the present invention, it will be understood that the present invention is not limited to such a configuration, but is intended to encompass any configuration capable of carrying out the operations described herein. Furthermore, while particular functionalities are shown in particular blocks by way of illustration, functionalities of different blocks and/or portions thereof may be combined, divided, and/or eliminated. Moreover, the functionality of the hardware/software architecture of FIG. 2 may be implemented as a single processor system or a multi-processor system in accordance with various embodiments of the present invention.

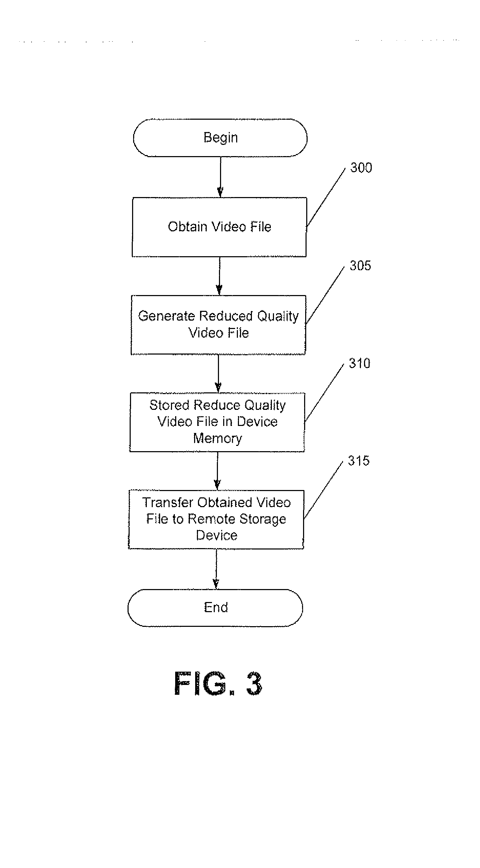

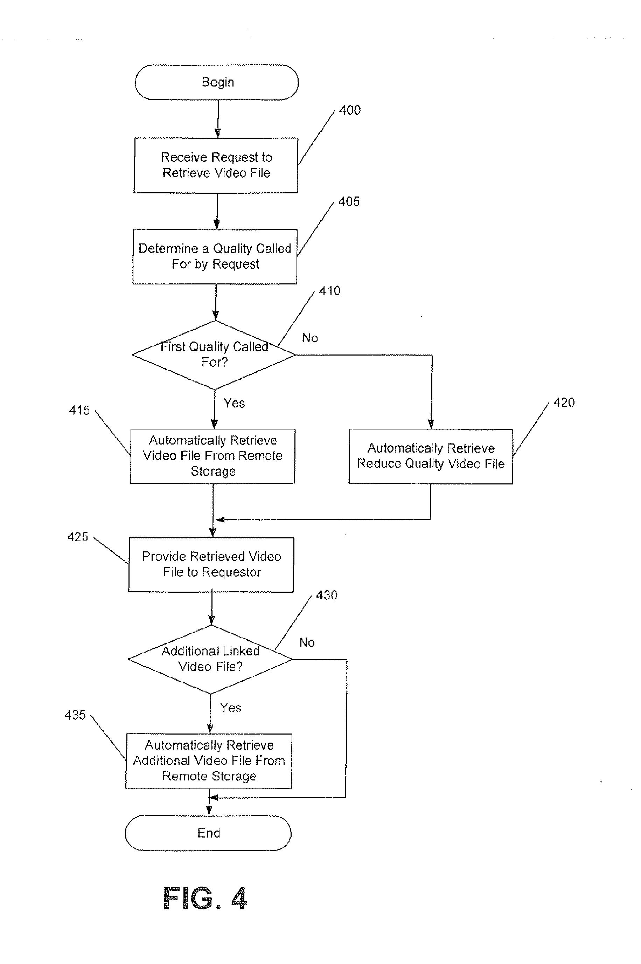

Methods of managing memory usage on a computing device according to some embodiments of the present invention will now be further described with reference to the flowchart illustrations of Figures 3 and 4. Referring first to the embodiments of Figure 3, operations begin at Block 300 by obtaining a video file having a first quality and a first file size (Block 300). For example, the computing device may be the mobile terminal 200 having the camera 205 and operations at Block 300 may including capturing the video file using the camera 205. The first quality may be the resolution (*e.g*., 12Mpix) of the camera 205 and the first file size may be the file size for storage of the captured video file (picture or video clip) at full resolution. In other embodiments, the video file may be obtained, for example, by downloading over the internet or from a memory card coupled to the computing device.

A reduced quality video file is automatically generated from the obtained video file responsive to obtaining the video file. (Block 305). The reduced quality video file has a second quality and a second file size. For example, the second quality may be a resolution selected to correspond to a resolution of the display 225 of the mobile terminal 200 so that the reduced quality video file may be displayed to the user on the display 225 without any user detectable quality difference from the use of the reduced quality video file in place of the first quality obtained video file to drive the display 225. As such, the second file size may be less than the first file size.

The reduced resolution video file is automatically stored on the memory of the computing device, such as in the video file 285 memory section of the mobile terminal 200 (Block 310). The obtained video file is automatically transferred to a storage device remote from the computing device, such as to the remote storage device 115, 225 of FIG. 1 (Block 315). In some embodiments of the present invention where the storage device remote from the computing device has an associated internet address, operations at Block 315 include determining a designated access method of the computing device for the associated internet address and transferring the obtained video file to the storage device using the designated access method.

In some embodiments, operations at Blocks 305-315 are preceded by determining if an available memory size of the computing device meets a transfer criterion. For example, the computing device may include a user selectable available memory criterion and the operations at Blocks 305-315 may not be carried out until the actual available memory falls below the user selectable available memory criterion. Until such time, the obtained video files may be stored with the first quality and first file size on the computing device. The reduced quality video file will then only be generated and the first quality obtained video record will only be transferred when the available memory size meets the transfer criterion. In other embodiments, the reduced quality video file may be generated and saved along with the first quality obtained video file on the computing device local memory even when the available memory size does not meet the transfer criterion.

Referring now to the embodiments of FIG. 4, operations related to retrieval of a remotely stored video file will be described. For the embodiments of FIG. 4, operations begin at Block 400 by receiving a request to retrieve the video file obtained at Block 300 of FIG. 3 (Block 400). A quality called for by the received request is determined (Block 405). For example, operations at Block 405 may include determining the received request calls for the first quality when the computing device is connected to an external device having a quality that is not supported by the reduced quality video file. In other embodiments, operations at Block 405 include identifying an application that generated the request received at Block 400 and determining if the received request calls for the first quality based on a characteristic of the application from which the request was received. For example, if the request is received from an application that drives the display 225 of the mobile terminal 200, it may be determined that the request does not call for the first quality and that the reduced quality video file may be used and provided responsive to the request. By way of further example, if the requesting application has the characteristic of including a zoom functionality or an edit functionality, it may be determined that the remotely stored video record of the first quality is called for by the request.

Operations related to retrieving the remotely stored video file of the first quality will now be described with reference to Blocks 410 to 425. When it is determined at Block 410 that the first quality video is called for, the transferred obtained video file is automatically retrieved from the remote storage device (Block 415). When it is determined at Block 410 that the first quality video file is not called for, the stored reduced quality video file is automatically retrieved responsive to the received request (Block 420). The retrieved video file of the first or second quality is provided responsive to the received request (Block 425).

It will be understood that, while operations are described with reference to a conditional retrieval of the remotely stored video file above, in some embodiments of the present invention, the transferred obtained video file is automatically retrieved from the remote storage device responsive to the received request without first determining a quality called for by the request. Furthermore, while the described operations indicate that it is the requested quality video file provided responsive to the request, in some embodiments where the first quality video file is called for, the reduced quality video file may first be retrieved and provided responsive to the request and then the first quality video file may be provided after it is received so that any delays in retrieval may be less noticeable to the requesting application/user.

As also shown in FIG. 4, in some embodiments of the present invention it is also determined if an additional video file that has been transferred from the computing device is sequentially associated with the transferred obtained video file (Block 430). When it is determined that there is such an additional video file, the additional video file is also automatically retrieved (Block 435).

In the drawings and specification, there have been disclosed typical preferred embodiments of the invention and, although specific terms are employed, they are used in a generic and descriptive sense only and not for purposes of limitation, the scope of the invention being set forth in the following claims.

## Claims

1. A computer implemented method of managing memory usage on a computing device, comprising:
obtaining a data file having a first quality and a first file size;
automatically generating a modified quality data file from the obtained data file responsive to obtaining the data file, wherein the modified quality data file has a second quality and a second file size, the second file size being less than the first file size;
automatically storing the modified quality data file on a memory of the computing device; and
automatically transferring the obtained data file to a storage device remote from the computing device.

2. The method of claim 1, wherein the obtained data file comprises a video file and the modified quality data file comprises a reduced quality video file.

3. The method of claim 2, wherein automatically generating the reduced quality video file and automatically transferring the obtained video file are preceded by determining if an available memory size of the computing device meets a transfer criterion and wherein automatically generating the reduced quality video file and automatically transferring the obtained video file comprise only generating the reduced quality video file and transferring the obtained video file when the available memory size meets the transfer criterion.

4. The method of claim 2 or 3 wherein automatically transferring the obtained video file is followed by:
receiving a request to retrieve the obtained video file: and
automatically retrieving the transferred obtained video file from the remote storage device responsive to the received request.

5. The method of any of claims 2-4, further comprising:
determining if an additional video file that has been transferred from the computing device is sequentially associated with the transferred obtained video file; and
automatically retrieving the additional video file when the additional video file is sequentially associated with the transferred obtained video file.

6. The method of any of claims 2-5, wherein automatically transferring the obtained video file is followed by:
receiving a request to retrieve the obtained request;
determining a quality called for by the received request; and then
providing the stored reduced quality video file responsive to the received request when the received request does not call for the first quality; and
automatically retrieving the transferred obtained video file from the remote storage device and providing the retrieved video file responsive to the received request when the received request calls for the first quality.

7. The method of claim 6, wherein determining if the received request calls for the first quality comprises determining the received request calls for the first quality when the computing device is connected to an external device having a quality that is not supported by the reduced quality video file.

8. The method of claim 6 or7, wherein determining if the received request calls for the first quality comprises:
identifying an application that generated the received request; and
determining if the received request calls for the first quality based on a characteristic of the application.

9. The method of any of claims 1-8, wherein the computing device comprises a mobile terminal and wherein the storage device remote from the computing device has an associated internet address and wherein automatically transferring the obtained video file comprises:
determining a designated access method of the mobile terminal for the associated internet address; and
transferring the obtained video file to the storage device using the designated access method.

10. A computing device comprising:
a memory;
a user interface;
an internet communication interface; and
a cache module configured to obtain a video file having a first quality and a first file size responsive to an input from the user interface, to automatically generate a reduced quality video file from the obtained video file responsive to obtaining the video file, wherein the reduced quality video file has a second quality and a second file size, the second file size being less than the first file size, to automatically store the reduced resolution video file on the memory and to automatically transfer the obtained video file to a storage device remote from the computing device using the internet communication interface.

11. The device of claim 10, wherein the computing device further comprises a display having a resolution and wherein the second quality corresponds to the resolution of the display.

12. The device of claim 10 or 11, wherein the computing device comprises a mobile terminal and wherein the user interface includes a camera and wherein the cache module is configured to obtain the video file from the camera responsive to a request from the user interface.

13. The device of claim 10, 11 or 12, wherein the computing device further comprises an external device interface and wherein the cache module is configure to determine the received request calls for the first quality when the external device interface is connected to an external device having a quality that is not supported by the reduced quality video file.

14. A computer program product for managing memory usage on a computing device, the computer program product comprising:
a computer-readable storage medium having computer-readable program code embodied in said medium, said computer-readable program code comprising:
computer-readable program code that obtains a video file having a first quality and a first file size;
computer-readable program code that automatically generates a reduced quality video file from the obtained video file responsive to obtaining the video file, wherein the reduced quality video file has a second quality and a second file size, the second file size being less than the first file size;
computer-readable program code that automatically stores the reduced resolution video file on a memory of the computing device; and
computer-readable program code that automatically transfers the obtained video file to a storage device remote from the computing device.

15. The computer program product of claim 14, further comprising computer-readable program code that receives a request to retrieve the obtained video file and automatically retrieves the transferred obtained video file from the remote storage device responsive to the received request.
